# EUROPEAN PATENT APPLICATION

(11) **EP 2 226 519 A2**
(43) Date of publication of application: **08.09.2010**
(21) Application number: 09167505.8
(22) Date of filing: 07.08.2009
(51) Int. Cl.: F16B 25/10

(54) **Tapping Screw**

(30) Priority: 06.03.2009 TW 98107288
(71) Applicant: Chin, Yung-Ming, Taichung County 43243 (TW)
(72) Inventor: Chin, Yung-Ming, Taichung County 43243 (TW)
(74) Representative: Lang, Christian

(57) **Abstract**

A tapping screw comprises a screw head (10), wherein one end of the screw head includes a screw rod (11) having an external screw thread. A bit (12) is integrally extended from a front of the screw rod (11). A tip portion (121) is disposed to a tip of the bit (12), and furthermore inclined diagonals of the bit have two vertical cutter surfaces (122) showing a symmetric state or an asymmetric state. Corresponding outside of the two vertical cutter surfaces (122) is upwardly an interior shrinkage cone (123). Two tapered tangential planes (124) are formed at the tip portion (121). The blades of the two tapered tangential planes (124) have a plurality of teeth (125) showing a symmetric state or an asymmetric state. The side blade of the corresponding outside of the two vertical cutter surfaces (122) further has a plurality of side teeth (126) showing a symmetric state or an asymmetric state.

## Description

### FIELD OF THE INVENTION

The present invention relates to a tapping screw, and more particularly to a cutting blade of its bit that has a plurality of teeth so that while drilling on a surface of a workpiece, it has multipoint cutting function, and reduces the friction between the bit and the workpiece to achieve the technical innovation for rapid drilling.

### BACKGROUND OF THE INVENTION

According to a disclosed structure related to the present invention, two symmetric surfaces of a bit portion of a tail of a thread on a tapping screw are of a tip column shape. One side of one symmetric surface for clockwise screwing is a scraping surface of an inverted triangle plane. The outer side of the scraping surface has a blade that is beneficially scrapped into the workpiece. Another side of the tip column is a bit tip. A small tip angle (the same plane of the top plane of the bit tip is a scraping surface of another symmetric surface where a small tip angle is not opened at a bit tip of another symmetric surface) is opened at a top plane of the bit tip. An inclined plane as a chip conveyor is opened between the scraping surface and the bit tip. Accordingly, when the tapping screw is screwed into the workpiece, a small tip angle disposed to the scraping surface of the tip column of the bit portion of the tapping screw can reduce the angle of one end of the bit portion so as to improve the cutting capability for the bit drilling the workpiece. Chips can be shaved from the scraping surface of another surface, and removed from the bit portion via the inclined plane as the chip conveyor.

The foregoing conventional structure merely disposes a small tip angle at the top plane of one bit tip from the symmetric scraping surfaces where the top of the bit tip of the symmetric sides is an inclined cutter that is remained without damage. According to the symmetric relationship for two sides of the bit tip, when the bit tip of the tapping screw drills holes on the surface of the workpiece, the small tip angle of the bit tip may perform semicircle rotation to produce the effect as initially contacting the working piece. Afterward, since another relative end of the bit tip does not have the small tip angle showing complete inclined cutter that is directly in contact with the workpiece in advance, the bit tip having the small tip angle may not produce the predictable effect ultimately.

Therefore, to overcome the foregoing shortcomings, the inventor(s) of the present invention conducted extensive researches and experiments for the screw structure based on years of experience in the related field, and finally invented a tapping screw.

### SUMMARY OF THE INVENTION

A primary objective of the present invention is to provide a screw that disposes a plurality of teeth with a symmetric state or an asymmetric state at two side blades so that when the screw is in contact with a workpiece, it does not only have multipoint cutting function, but also reduces the friction between the screw and the workpiece, thereby achieving the effect for fast drilling.

The present invention is a tapping screw comprising a screw head. One end of the screw head includes a screw rod having an external screw thread. A bit is integrally extended from a front of the screw rod. The tip of the bit has a tip portion and inclined diagonals of the bit have two vertical cutter surfaces showing a symmetric state or an asymmetric state. Corresponding outside of the two vertical cutter surfaces is upwardly an interior shrinkage cone. Two tapered tangential planes are formed at the tip portion. The feature of the invention is that the blades of the two tapered tangential planes have a plurality of teeth showing a symmetric state or an asymmetric state. The side blade of the corresponding outside of the two vertical cutter surfaces further has a plurality of side teeth showing a symmetric state or an asymmetric state so that when the bit is in contact with the workpiece, multipoint cutting feature is obtained to achieve the effect for rapid locking.

### BRIEF DESCRIPTION OF THE DRAWINGS

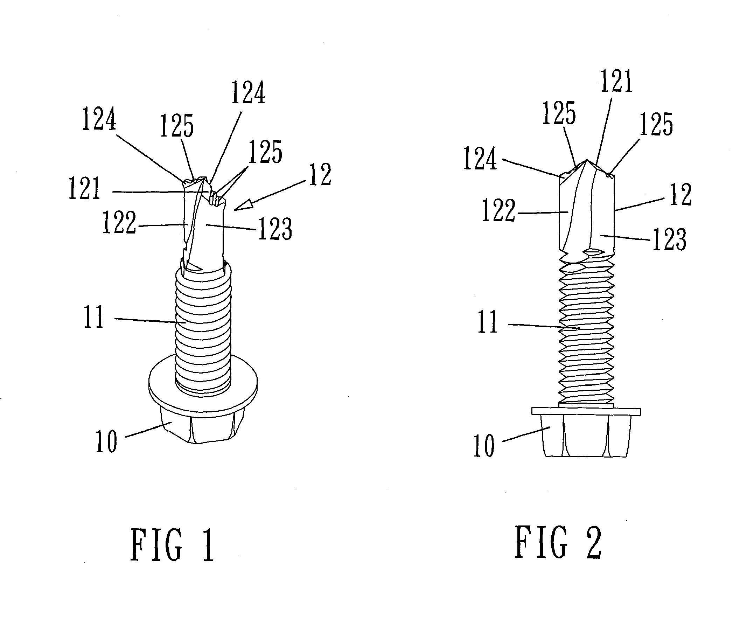

FIG. 1 is a three-dimensional view illustrating a structure according to a preferred embodiment I of the present invention;
FIG. 2 is a front view drawing illustrating a structure according to a preferred embodiment I of the present invention;
FIG. 3 is a side-view drawing illustrating the structure according to a preferred embodiment I of the present invention;
FIG. 4 is a three-dimensional view illustrating the structure according to a preferred embodiment II of the present invention;
FIG. 5 is a front view drawing illustrating the structure according to a preferred embodiment II of the present invention;
FIG. 6 is a side-view drawing illustrating the structure according to a preferred embodiment II of the present invention;
FIG. 7 is a three-dimensional view illustrating the structure according to a preferred embodiment III of the present invention;
FIG. 8 is a front view drawing illustrating the structure according to a preferred embodiment III of the present invention;
FIG. 9 is a three-dimensional view illustrating the structure according to a preferred embodiment IV of the present invention; and
FIG. 10 is a front view drawing illustrating the structure according to a preferred embodiment IV of the present invention.

### DETAILED DESCRIPTION OF THE PREFERRED EMBODIMENTS

Other features and advantages of the present invention will become apparent from the following description of the invention which refers to the accompanying drawings.

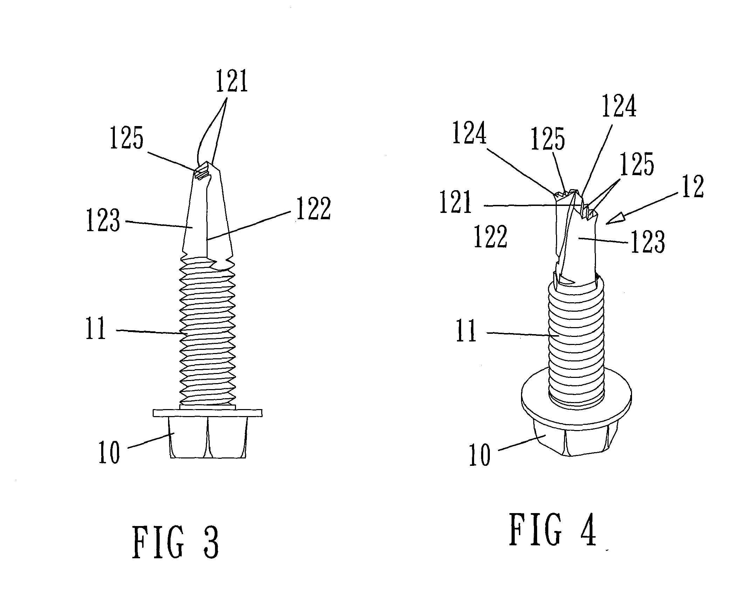

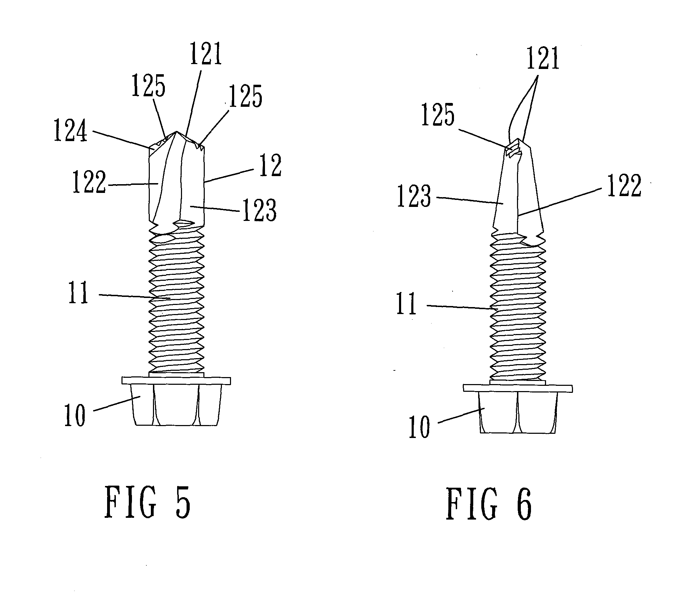

Firstly, referring to FIG.. 1 to FIG. 3, a tapping screw is shown according to a preferred embodiment I of the present invention, and comprises:
A screw head 10 includes a screw rod 11 having an external screw thread at one end of the screw head 10. A bit 12 is integrally extended from a front of the screw rod 11. A tip of the bit 12 is a tip portion 121, and furthermore inclined diagonals of the bit 12 have two vertical cutter surfaces 122 showing a symmetric state or an asymmetric state. Corresponding outside of the two vertical cutter surfaces 122 is an interior shrinkage cone 123 upwardly. Two tapered tangential planes 124 are formed at the tip portion 121. A feature of the invention is as follows:
   The blades of the two tapered tangential planes 124 have a plurality of teeth 125 showing a symmetric state or an asymmetric state. The teeth 125 shown in the embodiment are designed as wave tooth. Further, as shown in FIG. 4 to FIG. 6, a tapping screw is illustrated according to a preferred embodiment II of the present invention. The plurality of teeth 125 disposed to the blade of the tapered tangential planes 124 is designed as saw tooth. Accordingly, when the bit is in contact with the workpiece (not shown in the figure), it has multipoint cutting function, and reduces the friction to achieve the function of rapidly drilling and locking.

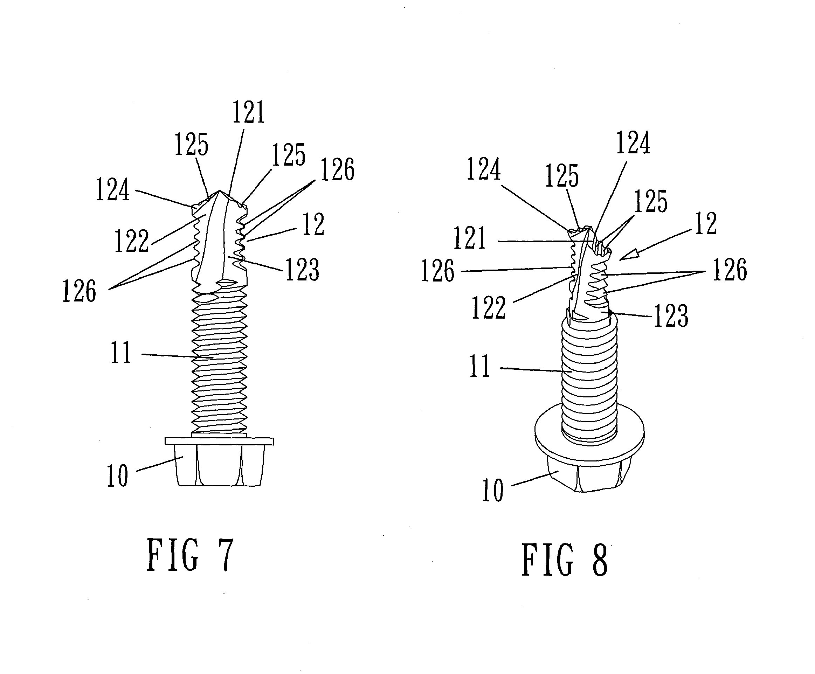

Moreover, as shown in FIG. 7 and FIG. 8, a tapping screw is illustrated according to a preferred embodiment III of the present invention. The plurality of teeth 125 disposed to the blade place of the two tapered tangential planes 124 of the bit 12 is extended toward the outside of the vertical cutter surfaces 122. Namely, the side blades of the two vertical cutter surfaces 122 have a plurality of side teeth 126 showing a symmetric state or an asymmetric state. The foregoing teeth 125 and the side teeth 125 are wave teeth.

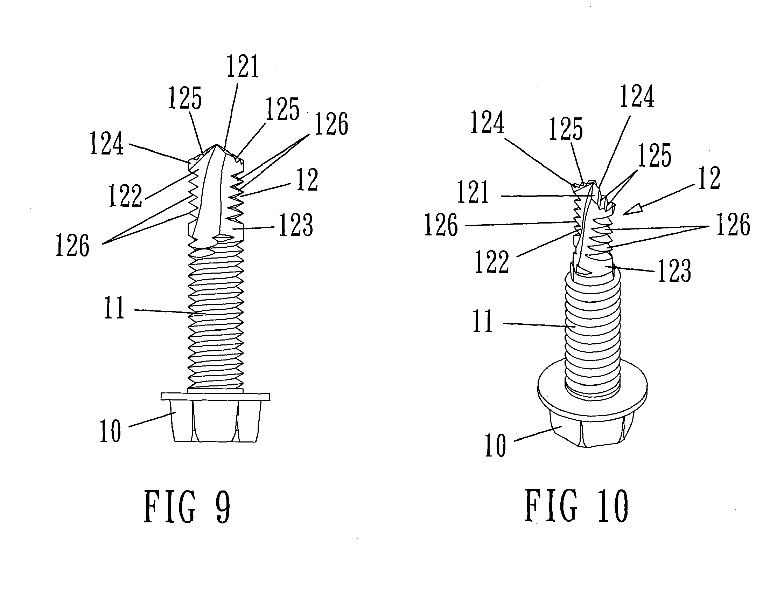

Again, as shown in FIG. 9 and FIG. 10, a tapping screw is shown according to a preferred embodiment IV of the present invention. The plurality of teeth 125 disposed to the blade place of the two tapered tangential planes 124 of the bit 12 is extended toward the outside of the vertical cutter surfaces 122. Namely, the plurality of side teeth 126 is disposed to the side blade of the vertical cutter surfaces 122. The foregoing teeth 125 and the side teeth 126 are saw teeth.

Although the features and advantages of the embodiments according to the preferred invention are disclosed, it is not limited to the embodiments described above, but encompasses any and all modifications and changes within the spirit and scope of the following claims.

## Claims

1. A tapping screw comprising: a screw head having a screw rod at one end of the screw head, wherein a bit having a tip portion is extended from a front of the screw rod and inclined diagonals of the bit have two vertical cutter surfaces, and a tapered tangential plane is formed at the tip portion of the two vertical cutter surfaces, and corresponding outsides of the two vertical cutter surfaces have an interior shrinkage cone,
**characterized in that**
the two vertical cutter surfaces being disposed in a symmetric state or an asymmetric state, and a blade place of the two tapered tangential plane having a plurality of teeth showing a symmetric state or an asymmetric state.

2. The tapping screw as claimed in claim 1, wherein the plurality of teeth shows a wave tooth form.

3. The tapping screw as claimed in claim 1, wherein the plurality of teeth shows a saw tooth form.

4. The tapping screw as claimed in claim 1, wherein side blades of corresponding outsides of the two vertical cutter surfaces have a plurality of side teeth showing a symmetric state or an asymmetric state.

5. The tapping screw as claimed in claim 4, wherein the plurality of teeth shows a wave tooth form.

6. The tapping screw as claimed in claim 4, wherein the plurality of teeth shows a saw tooth form.

7. A tapping screw comprising: a screw head having a screw rod at one end of the screw head, wherein a bit having a tip portion is extended from a front of the screw rod and inclined diagonals of the bit have two vertical cutter surfaces, and tapered tangential planes are formed at the tip portion of the two vertical cutter surface, and corresponding outsides of the two vertical cutter surfaces have an interior shrinkage cone,
**characterized in that**
blade places of the two tapered tangential planes having a plurality of teeth showing a symmetric state or an asymmetric state, and a side blade of a corresponding outside of the two vertical cutter surfaces having a plurality of side teeth showing a symmetric state or an asymmetric state.

8. The tapping screw as claimed in claim 7, wherein the plurality of teeth disposed to the tapered tangential planes is any one of wave tooth or saw tooth.

9. The tapping screw as claimed in claim 7, wherein the plurality of teeth disposed to the vertical cutter surfaces is any one of wave tooth or saw tooth.
